# FASCICULE DE BREVET EUROPEEN

(11) **EP 1 549 578 B1**
(45) Date de publication et mention de la délivrance du brevet: **13.12.2006**
(21) Numéro de dépôt: 02807859.0
(22) Date de dépôt: 25.09.2002
(51) Int. Cl.: B65G 53/42

(54) **DISPOSITIF D'ASPIRATION D'UN PRODUIT PULVERULENT**
VORRICHTUNG ZUM SAUGEN EINES PULVERFÖRMIGEN PRODUKTS
DEVICE FOR SUCTIONING A POWDERY PRODUCT

(43) Date de publication de la demande: 06.07.2005
(73) Titulaire: Dietrich, Yves, 1024 Ecublens (CH); Dietrich, Frédéric, 1054 Morrens (CH)
(72) Inventeur: Dietrich, Yves, 1024 Ecublens (CH); Dietrich, Frédéric, 1054 Morrens (CH)
(74) Mandataire: Bugnion Genève
(86) Numéro de dépôt international: PCT/IB2002/003962
(87) Numéro de publication internationale: WO 2004/028931

(56) Documents cités:
- DE-A- 1 917 549
- DE-A- 3 509 166
- DE-B- 1 019 963
- FR-A- 1 437 380

## Description

La présente invention concerne un dispositif d'aspiration d'un produit pulvérulent à partir d'un réservoir, comprenant une canne d'aspiration reliée à une installation pneumatique de transfert par aspiration, ladite canne comprenant un tube destiné à être relié par une des ses extrémités à un tuyau d'aspiration et transfert, la deuxième extrémité du tube étant munie d'une tête d'émottage agencée pour désagglomérer les mottes et permettre l'aspiration du produit.

Dans l'industrie pharmaceutique et de la chimie fine, les matières premières, les intermédiaires et les produits finis pulvérulents sont souvent stockés en fût. Certains produits ont tendance à former des mottes ou à se compacter lorsqu'ils sont stockés pendant une longue durée ou lorsqu'ils sont transportés. Des agglomérats peuvent aussi se former lors d'une étape de production (séchage, centrifugation, etc.).

Le fût est un moyen simple et économique pour le stockage et le transport de la poudre. Ces fûts doivent cependant être vidangés à un moment ou à un autre et la poudre sera, soit conditionnée, soit utilisée pour une nouvelle étape de production.

Dans la plupart des procédés (conditionnement, réaction, mélange, etc.) la poudre doit être broyée ou tamisée avant d'être utilisée.

Il existe deux méthodes pour vidanger des fûts contenant de la poudre. Soit par gravité en retournant le fût, soit par aspiration en utilisant un système pneumatique de transfert de poudre.

La vidange manuelle d'un fût est la méthode la plus usuelle. Le fut est soulevé et vidangé dans un tamis ou un broyeur. Cette méthode génère cependant beaucoup de poussières. Elle demande une manipulation manuelle du fût ou l'utilisation d'un équipement de manutention coûteux et encombrant pour retourner les fûts. Le produit est, dans la plupart des cas, remis en fût et celui-ci sera vidangé à nouveau lors de l'étape de production suivante, voire, dans certains cas, aspiré directement par un système de transport pneumatique.

Il est pratiquement impossible ou particulièrement difficile de transférer la poudre directement depuis le fût par un système pneumatique lorsqu'elle contient des mottes ou lorsque le produit est fortement compacté dans le fût.

Il existe des installations mécaniques qui peuvent broyer le produit directement dans le fût permettant ainsi d'aspirer le produit après préparation. Ces installations sont cependant onéreuses et ne sont souvent pas conçues pour des applications pharmaceutiques. La poudre est en plus fréquemment stockée dans des saches plastiques qui ne doivent pas être endommagées lors des diverses manipulations.

Les DE-A 3509166 et DE-A-1917549 proposent des dispositifs conformément au préambule de la revendication 1.

La présente invention a pour but de proposer un dispositif palliant les inconvénients précités.

Le dispositif selon l'invention est caractérisé par le fait que la tête comprend une hélice formée d'au moins deux pales avec des dents, solidaire d'un arbre entraîné par un moteur pneumatique, et que les pales présentent un angle d'incidence permettant d'entraîner le produit dans le sens d'aspiration.

L'avantage du dispositif selon l'invention est qu'il s'agit d'un dispositif relativement léger donc maniable et d'un coût abordable et non d'une installation de broyage conventionnelle. Le dispositif permet d'aspirer directement la poudre dans un réservoir tout en cassant les mottes lors de l'aspiration. L'effort mécanique sur la poudre est en plus limité car la poudre est aspirée dès qu'elle est désagglomérée ne modifiant ainsi pas sa structure.

Selon une exécution l'arbre est muni à proximité de la tête d'émottage des couteaux radiaux. Ainsi, si des agglomérats de produit passent à travers les pales de l'hélice ils seront cassés par les couteaux évitant un compactage du produit dans la canne d'aspiration.

Selon une autre variante d'exécution l'extrémité inférieure de la tête est munie de barreaux de protection empêchant le contact direct entre ladite tête et le réservoir. Ces barreaux sont particulièrement utiles lorsque les réservoirs sont des fûts comprenant des saches plastiques car ils limitent voire éliminent le risque de les endommager.

Selon une exécution préférée le dispositif est muni d'une poignée en forme d'arceau entourant la canne sur sa partie supérieure, ledit arceau étant muni d'un organe de commande du moteur pneumatique.

Enfin la tête d'émottage peut être amovible permettant d'adapter le dispositif aux caractéristiques du produit à transférer. Cette adaptation peut concerner aussi bien les caractéristiques du matériau utilisé que des caractéristiques mécaniques de la tête et plus particulièrement des pales.

L'invention sera décrite plus en détail à l'aide du dessin annexé.

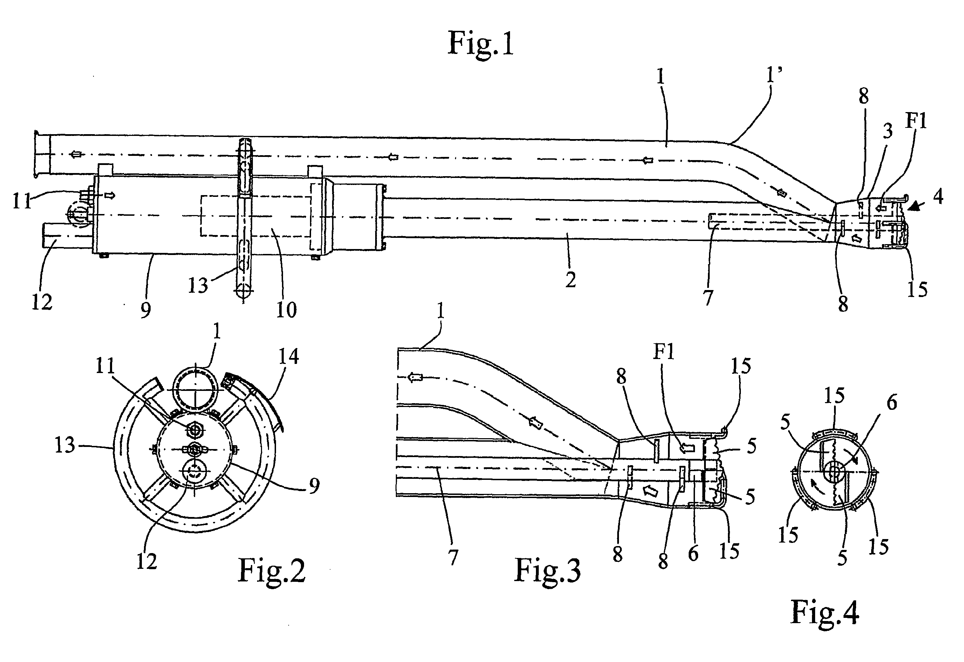

La figure 1 est vue de côté de la canne d'aspiration,
la figure 2 est une vue de gauche de la figure 1,
la figure 3 est un agrandissement de la partie inférieure de la canne d'aspiration et,
la figure 4 est une vue de droite de la figure 3.

La canne d'aspiration comprend un tube d'aspiration 1 relié à son extrémité supérieure par un raccord rapide à un tuyau (non représenté) d'une installation pneumatique de transfert par aspiration de produits pulvérulents. L'extrémité inférieure du tube 1 présente un coude 1' raccordé à un tube 2 abritant un arbre 7 entraîné par un moteur pneumatique 10 logé dans un boîtier de protection 9. Le moteur 10 est alimenté en air comprimé par une entrée 11 et l'air s'échappe par une sortie 12 située sur la partie supérieure du boîtier 9 pour éviter toute contamination avec le produit à transférer. La partie inférieure du tube 2 débouche dans une tête tronconique 3 se terminant par partie cylindrique. Une hélice 4 comprenant au mois deux pales 5 avec des dents solidaires d'un axe 6 est couplée sur l'extrémité de l'arbre 7. Les pales présentent un angle d'incidence permettant d'entraîner le produit dans le sens d'aspiration (flèches F1). La partie inférieure de l'arbre 7 est munie de couteaux radiaux 8 permettant de casser les éventuels agglomérats du produit qui ne seraient pas désagrégés par les pales 5, évitant ainsi le compactage du produit dans le tube 1 et son coude 1'. Trois barreaux 15 évitent le contact de la tête 3 et plus précisément de l'hélice 4 avec le fût à vidanger. Ces barreaux sont particulièrement utiles lorsque le produit se trouve dans une sache en plastique qui pourrait être endommagée par un contact direct avec l'hélice 4.

La partie supérieure du dispositif est munie d'une poignée 13 en forme d'arceau permettant sa manipulation. Elle munie d'une manette de commande du moteur 10. La manette 14 revient automatiquement à la position d'arrêt du moteur 10 dès que l'on la lâche. Le dispositif peut être suspendu par un crochet à une potence avec compensateur de poids facilitant sa manipulation.

L'hélice 4 est amovible pour pouvoir adapter le dispositif aux caractéristiques du produit. L'angle d'incidence de l'hélice ainsi que le pas des dents et leur forme peuvent être modifiés selon le produit. Par exemple, un angle d'incidence plus prononcé peut être utile pour des produits possédant une bonne caractéristique de perméabilité à l'air et permettra une bonne capacité d'aspiration de la poudre. En contre partie, l'angle d'incidence devra être diminué pour un produit collant ou compactant et le nombre de couteaux, en partie arrière, devra être augmenté afin d'éviter un compactage du produit dans la tête d'aspiration.

Le dispositif décrit ou canne émotteuse est relié à une installation de transport pneumatique par aspiration. L'opérateur introduit la canne dans le fût et, lors de l'aspiration du produit, il active le moteur 10 via la manette 14 afin de casser les agglomérats. A la fin de la vidange du fût, il peut arrêter le moteur, aspirer la poudre restant au fond du fût et ainsi éviter d'endommager les saches.

La combinaison de la canne émotteuse avec une installation de transport pneumatique permet d'aspirer le produit directement à partir du fût même si le produit est compacté et motté. Toute manipulation du fût est, de cette manière, éliminée. Le produit peut être directement transféré dans l'équipement à charger.

Pour résumer, les avantages de ce dispositif sont les suivants:
- Diminution du besoin de manutention des fûts et des équipements annexes
- Dispositif simple, compact, économique, facilement transportable et silencieux
- Vidange de fûts de différentes tailles avec ou sans saches
- Peu de création de poussières
- Faible contrainte sur le produit permettant de conserver les propriétés du produit.

Le dispositif peut aussi être utilisé en l'intégrant avantageusement dans une ligne de transfert pneumatique des produits pulvérulents. Ainsi, par exemple, le dispositif étant intégré dans le tube de transfert à proximité de l'endroit d'aspiration ou directement à la sortie d'une trémie de stockage permet d'éliminer la mise en place d'un broyeur onéreux en partie inférieure d'une trémie de stockage ou à la sortie d'un sécheur, centrifugeuse, etc. Dans ce cas la poignée 14 n'est pas nécessaire car la canne est intégrée dans la ligne de transfert et le moteur 10 est commandé en synchronisme avec l'aspiration.

## Revendications

1. Dispositif d'aspiration d'un produit pulvérulent à partir d'un réservoir, comprenant une canne d'aspiration reliée à une installation pneumatique de transfert par aspiration ladite canne comprenant un tube (1) destiné à être relié par une des ses extrémités à un tuyau de transfert par aspiration, la deuxième extrémité du tube (1) étant munie d'une tête d'émottage (3) agencée pour désagglomérer les mottes et permettre l'aspiration du produit,**caractérisé par le fait que** la tête (3) comprend une hélice (4) formée d'au moins deux pales (5) avec des dents, solidaire d'un arbre (7) entraîné par un moteur pneumatique (10) et que les pales (5) présentent un angle d'incidence permettant d'entraîner le produit dans le sens d'aspiration (F1).

2. Dispositif selon la revendication 1, **caractérisé par le fait que** l'arbre (7) est muni à proximité de la tête d'émottage des couteaux radiaux (8).

3. Dispositif selon une des revendications 1 ou 2, **caractérisé par le fait que** l'extrémité inférieure de la tête (3) est munie de barreaux de protection (15) empêchant le contact direct entre ladite tête (3) et le réservoir.

4. Dispositif selon une quelconque des revendications 1 à 3,**caractérisé par le fait qu'**il est muni d'une poignée (13) en forme d'arceau entourant la canne sur sa partie supérieure, ledit arceau étant muni d'un organe de commande (14) du moteur pneumatique (10).

5. Dispositif selon une quelconque des revendications 1 à 4 **caractérisé par le fait que** la tête d'émottage (3) est amovible permettant d'adapter le dispositif aux caractéristiques du produit à transférer.

6. Utilisation du dispositif selon une des revendications 1 ou 2 dans une ligne de transfert pneumatique des produits pulvérulents, le dispositif étant intégré dans le tube de transfert à proximité de l'endroit d'aspiration ou directement à la sortie d'une trémie de stockage.

## Claims

1. A device for suctioning a powdery product from a reservoir, comprising a suction pipe connected to a pneumatic suction transfer installation, said pipe including a tube (1) designed to be connected at one of its ends to a suction transfer hose, the second end of the tube (1) being provided with a lump-breaking head (3) arranged so as to break down lumps and to enable the product to be suctioned, **characterized in that** the head (3) includes a propeller (4) formed of at least two blades (5) with teeth, integral with a shaft (7) driven by a pneumatic motor (10) and that the blades (5) present an angle of incidence that enables the product to be driven in the direction of suctioning (F1).

2. The device as claimed in claim 1, **characterized in that** the shaft (7) is provided with radial knives (8) close to the lump-breaking head.

3. The device as claimed in one of the claims 1 or 2, **characterized in that** the lower end of the head (3) is provided with protective bars (15) preventing direct contact between said head (3) and the reservoir.

4. The device as claimed in any one of claims 1 to 3, **characterized in that** it is provided with a handle (13) in the form of a loop surrounding the pipe on its upper part, said loop being provided with a device (14) for controlling the pneumatic motor (10).

5. The device as claimed in one of claims 1 to 4, **characterized in that** the lump-breaking head (3) can be detached in order to adapt the device to the properties of the product to be transferred.

6. A use for the device as claimed in one of the claims 1 or 2 in a line for the pneumatic transfer of powdery products, the device being incorporated in the transfer tube close to the suction point or directly at the outlet from a storage hopper.

## Patentansprüche

1. Vorrichtung zum Ansaugen eines pulverförmigen Produkts aus einem Behälter, die einen Saugstock aufweist, der mit einer pneumatischen Einrichtung zur Überführung durch Ansaugen verbunden ist, wobei der genannte Saugstock mit einem Rohr (1) versehen ist, welches dazu bestimmt ist, an einem seiner Enden mit einem Rohr zur Überführung durch Ansaugen verbunden zu werden, und wobei das andere Ende des Rohrs (1) mit einem Aufbrechkopf (3) ausgerüstet ist, welcher zum Zerteilen von Klumpen und Ermöglichen des Absaugens des Produktes eingerichtet ist, **dadurch gekennzeichnet, dass** der Kopf (3) eine Flügelschraube (4) aufweist, die aus mindestens zwei Flügeln (5) mit Zähnen besteht und an einer Welle (7) angebracht ist, welche von einem pneumatischen Motor (10) angetrieben wird, und dass die Flügel (5) einen Anstellwinkel aufweisen, der das Abführen des Produktes in Ansaugrichtung (F1) erlaubt.

2. Vorrichtung nach Anspruch 1, **dadurch gekennzeichnet, dass** die Welle (7) anschliessend an den Aufbrechkopf mit radialen Messern (8) versehen ist.

3. Vorrichtung nach einem der Ansprüche 1 und 2, **dadurch gekennzeichnet, dass** der untere Endbereich des Kopfes (3) mit Schutzstäben (15) ausgestattet ist, welche eine direkte Berührung des genannten Kopfes (3) mit dem Behälter verhindern.

4. Vorrichtung nach einem der Ansprüche 1 bis 3, **dadurch gekennzeichnet, dass** sie mit einem Handgriff (13) in Form eines Bogens ausgerüstet ist, welcher den Saugstock im oberen Teil umgibt, wobei der genannte Bogen mit einem Steuerelement (14) des pneumatischen Motors (10) versehen ist.

5. Vorrichtung nach einem der Ansprüche 1 bis 4, **dadurch gekennzeichnet, dass** der Aufbrechkopf (3) abnehmbar gestaltet ist, wodurch die Vorrichtung an die Eigenschaften des zu fördernden Produktes angepasst werden kann.

6. Verwendung der Vorrichtung nach einem der Ansprüche 1 und 2 in einer pneumatischen Förderanlage pulverförmiger Produkte, wobei die Vorrichtung in das Förderrohr benachbart zu derjenigen Stelle integriert ist, an der ein Ansaugen stattfindet, oder aber unmittelbar am Ausgang eines Vorratsbehälters.
